# EUROPEAN PATENT APPLICATION

(11) **EP 3 473 920 A1**
(43) Date of publication of application: **24.04.2019**
(21) Application number: 18201460.5
(22) Date of filing: 19.10.2018
(51) Int. Cl.: F21S 43/31, F21S 43/40, F21S 43/20, G02B 19/00, G02B 3/08, F21V 8/00, F21S 43/239, F21S 43/243, F21S 43/247

(54) **VEHICULAR LIGHTING FIXTURE AND LENS BODY**

(30) Priority: 20.10.2017 JP 2017203527
(71) Applicant: STANLEY ELECTRIC CO., LTD., Tokyo 153-8636 (JP)
(72) Inventor: SATO, Akane, Tokyo, 153-8636 (JP); SUZUKI, Nobuyuki, Tokyo, 153-8636 (JP); YAJIMA, Toshihiko, Tokyo, 153-8636 (JP)
(74) Representative: Carstens, Dirk Wilhelm

(57) **Abstract**

A vehicular lighting fixture (10, 10A, 10B) and a lens body (20, 20A) capable of causing light to exit through a part of its surface are provided. The vehicular lighting fixture (10, 10A, 10B) can include a lens body (20, 20A), and a light source (30). The lens body (20, 20A) can include: a light incident portion (20c, 20Ac) through which light from the light source (30) enters the lens body (20, 20A); a lens cut portion (20e) having at least one lens cut surface (20e, 20e₁ to 20eₙ) configured to internally reflect light that has entered the lens body (20, 20A) through the light incident portion (20c, 20Ac); and a light irradiating portion (20f) provided on a portion of a front surface (20a) of the lens body (20, 20A) and through which reflected light from the lens cut surface (20e, 20e₁ to 20eₙ) exits. The lens cut surface (20e, 20e₁ to 20eₙ) can be formed from a surface of an outer conical surface (C₂) having a rotation axis so that the lens cut surface (20e, 20e₁ to 20eₙ) has a rotation axis which coincides with the rotation axis of the outer conical surface (C₂), and can be defined by an arbitrary surface (40) and a vertical plane (V₁) extending in a direction perpendicular to the rotation axis from a line of intersection between the arbitrary surface (40) and an inner conical surface (C₁) disposed inside the outer conicai surface (C₂) and having the same rotation axis as that of the outer conical surface (C₂). The lens cut surface (20e, 20e₁ to 20eₙ) can be provided to the lens cut portion (20e) between the front surface (20a) and the rear surface (20b) of the lens body (20, 20A) and in a region overlapping with the light irradiating portion (20f) in a front view.

## Description

### Technical Field

The present invention relates to a vehicular lighting fixture and a lens body capable of causing light to exit through a part of its surface.

### Background Art

Conventionally, in the field of vehicular lighting fixtures, there has been known a vehicular lighting fixture including a lens body having a front surface and a rear surface on the opposite side, and a light source disposed on the rear surface side of the lens body, for example, as disclosed in FIG. 1 of U.S. Patent No. 6,097,549.

In this vehicular lighting fixture of U.S. Patent No. 6,097,549, although the entire surface can be made to serve as a light-exiting surface, a part of the surface cannot be made to serve as a light-exiting surface, for example, in a line shape.

### Summary

The present invention was devised in view of these and other problems and features in association with the conventional art. According to an aspect of the present invention, a vehicular lighting fixture and a lens body capable of causing light to exit through a part of its surface can be provided.

According to another aspect of the present invention, a vehicular lighting fixture can include a lens body including a front surface and a rear surface opposite to the front surface, and a light source. The lens body can include: a light incident portion through which light emitted from the light source enters the lens body; a lens cut portion having at least one lens cut surface configured to internally reflect light that has been emitted from the light source and has entered the lens body through the light incident portion; and a light irradiating portion that is provided on a portion of the front surface of the lens body and through which light reflected from the lens cut surface exits. The lens cut surface can be formed from a surface of an outer conical surface having a rotation axis so that the lens cut surface has a rotation axis which coincides with the rotation axis of the outer conical surface, and can be defined by an arbitrary surface and a vertical plane extending in a direction perpendicular to the rotation axis from a line of intersection between the arbitrary surface and an inner conical surface disposed inside the outer conical surface and having the same rotation axis as that of the outer conical surface. The lens cut surface can be provided to the lens cut portion between the front surface and the rear surface of the lens body and in a region overlapping with the light irradiating portion in a front view.

This aspect can provide a vehicular lighting fixture capable of causing light to exit through a part of the front surface thereof, resulting in light emission observed substantially only in that part.

This can be achieved by the configuration in which the lens cut surface configured to internally reflect light, which has been emitted from the light source and has entered the lens body through the light incident portion, toward the light irradiating portion is provided to the lens cut portion between the front surface and the rear surface of the lens body and in a region overlapping with the light irradiating portion in a front view. That is, unlike the conventional technique described above, the lens cut surface is partially provided to the lens body.

In the vehicular lighting fixture with the aforementioned configuration, the light source can have an optical axis and the light incident portion can be provided on the optical axis of the light source. The lens body can further include a reflection surface configured to internally reflect light from the light source, which has entered through the light incident portion, radially about the optical axis of the light source. The lens cut surface can be provided on an optical path of reflected light from the reflection surface. The light irradiating portion can be provided on an optical path of reflected light from the lens cut surface. The lens cut surface can be formed from a surface of the outer conical surface having the rotation axis which coincides with the optical axis of the light source so that the lens cut surface has a rotation axis which coincides with the optical axis of the light source, and can be defined by the arbitrary surface and a vertical plane extending in a direction perpendicular to the optical axis of the light source from the line of intersection between the inner conical surface disposed inside the outer conical surface and the arbitrary surface.

With the vehicular lighting fixture having this configuration, light from the light source can enter through the light incident portion, can be internally reflected radially about the optical axis of the light source at the reflection surface, and can further be internally reflected by the lens cut surface toward the light irradiating portion. Accordingly, the vehicular lighting fixture can irradiate light from the light irradiating portion forward.

In the vehicular lighting fixture with the aforementioned configuration, the light incident portion may be provided on one end surface of the lens body which is located opposite to the lens cut portion. The lens cut surface may be provided on an optical path of the light that has emitted from the light source and has entered the lens body from the light incident portion. The light irradiating portion can be provided on an optical path of reflected light from the lens cut surface.

With the vehicular lighting fixture having this configuration, light from the light source can enter through the light incident portion and be internally reflected by the lens cut surface toward the light irradiating portion. Accordingly, the vehicular lighting fixture can irradiate light from the light irradiating portion forward.

The vehicular lighting fixture with the aforementioned configuration can further include a reflector provided between the light source and the light incident portion, and light from the light source can enter through the light incident portion as reflected light reflected by the reflector.

With the vehicular lighting fixture having this configuration, light from the light source can enter through the light incident portion as reflected light reflected by the reflector, and be internally reflected by the lens cut surface toward the light irradiating portion. Accordingly, the vehicular lighting fixture can irradiate light from the light irradiating portion forward.

In the vehicular lighting fixture with the aforementioned configuration, the lens body can include a protruding portion configured to protrude in a light irradiation direction, and the light irradiating portion can be provided at a tip of the protruding portion.

With the vehicular lighting fixture having this configuration, since the reflected light from the lens cut surface can be guided to the protruding portion, more light can be irradiated from the light irradiating portion than when the protruding portion is not provided.

In the vehicular lighting fixture with the aforementioned configuration, the light irradiating portion can include a light irradiating region through which the reflected light from the lens cut surface can exit, and
a density in the lens cut portion which indicates the number of the lens cut surfaces, each of which is contained in one segment defined between the conical surface and the vertical plane, per unit area of the lens cut portion can be adjusted to provide a region with a relatively high density and a region with a relatively low region, so that the light exiting through the light irradiating region formed can be uniformly observed.

With the vehicular lighting fixture having this configuration, the light irradiating portion can irradiate light uniformly.

According to still another aspect of the present invention, a lens body can include a front surface and a rear surface opposite to the front surface. The lens body can include: a light incident portion through which light from a light source enters the lens body; a lens cut portion having at least one lens cut surface configured to internally reflect light that has been emitted from the light source and has entered the lens body through the light incident portion; and a light irradiating portion that is provided on a portion of the front surface of the lens body and through which light reflected from the lens cut surface exits. The lens cut surface can be formed from a surface of an outer conical surface having a rotation axis so that the lens cut surface has a rotation axis which coincides with the rotation axis of the outer conical surface, and can be defined by an arbitrary surface and a vertical plane extending in a direction perpendicular to the rotation axis from a line of intersection between the arbitrary surface and an inner conical surface disposed inside the outer conical surface and having the same rotation axis as that of the outer conical surface. The lens cut surface can be provided to the lens cut portion between the front surface and the rear surface of the lens body and in a region overlapping with the light irradiating portion in a front view.

This aspect can provide a lens body capable of causing light to exit through a part of its surface to partially irradiate light.

This can be achieved by the configuration in which the lens cut surface configured to internally reflect light, which has been emitted from the light source and has entered the lens body through the light incident portion, toward the light irradiating portion is provided to the lens cut portion between the front surface and the rear surface of the lens body and in a region overlapping with the light irradiating portion in a front view. That is, unlike the conventional technique described above, this is because the lens cut surface is partially provided.

According to still another aspect of the present invention, a vehicular lighting fixture can include: a lens body including a front surface and a rear surface opposite to the front surface; and a light source having an optical axis (AX). Herein, the lens body can include: a light incident portion through which light emitted from the light source enters the lens body; a lens cut portion configured to internally reflect light that has been emitted from the light source and has entered the lens body through the light incident portion; and a light irradiating portion that is provided on a portion of the front surface of the lens body and through which light reflected from the lens cut portion exits. The lens cut portion can include at least two lens cut surfaces formed from stepped separate reflection surfaces, which each include a first vertical plane (V₁) extending in a direction perpendicular to the optical axis (AX) of the light source; a first lens cut surface (20e₁) formed of a part of a second conical surface (C₂) having a rotation axis that coincides with the optical axis (AX) of the light source, the first lens cut surface (20e₁) intersecting with the first vertical plane (V₁) at a second intersection line (L₂) on an outer side extending in the direction perpendicular to the optical axis (AX) of the light source; a second vertical plane (V₂) positioned outside of the second intersection line (L₂) and on a side closer to the light irradiating portion, the second vertical plane (V₂) extending in the direction perpendicular to the optical axis (AX); and a second lens cut surface (20e₂) formed of a part of a third conical surface (C₃) having a rotation axis that coincides with the optical axis (AX) of the light source, the second lens cut surface (20e₂) intersecting with the second vertical plane (V₂) at a third intersection line (L₃) on an outer side extending in the direction perpendicular to the optical axis (AX) of the light source. The lens cut portion can be provided to an area between the front surface and the rear surface of the lens body and in a region overlapping with the light irradiating portion in a front view.

In the aforementioned vehicular lighting fixture, the light incident portion may be provided on the optical axis of the light source, the lens body may further include a reflection surface configured to internally reflect light from the light source, which has entered through the light incident portion, radially about the optical axis of the light source, the lens cut portion may be provided on an optical path of reflected light from the reflection surface, and the light irradiating portion may be provided on an optical path of reflected light from the lens cut portion.

In the aforementioned vehicular lighting fixture, the lens cut surfaces in the lens cut portion may have a length in the direction of the optical axis (AX) becoming shorter as the lens cut surface approaches an end portion thereof apart from the optical axis (AX).

The aforementioned vehicular lighting fixture may further include a reflector provided between the light source and the light incident portion, wherein light from the light source enters through the light incident portion as reflected light reflected by the reflector. In this vehicular lighting fixture, the lens cut surfaces in the lens cut portion may have a length in the direction of the optical axis (AX) becoming shorter as the lens cut surface approaches an end portion thereof apart from the optical axis (AX).

According to still further another aspect of the present invention, a lens body having a front surface and a rear surface opposite to the front surface, can include: a light incident portion through which light from a light source enters the lens body; a lens cut portion configured to internally reflect light that has been emitted from the light source and has entered the lens body through the light incident portion; and a light irradiating portion that is provided on a portion of the front surface of the lens body and through which light reflected from the lens cut portion exits, wherein the lens cut portion includes at least two lens cut surfaces formed from stepped separate reflection surfaces, which each include a first vertical plane (V₁) extending in a direction perpendicular to the optical axis (AX) of the light source; a first lens cut surface (20e₁) formed of a part of a second conical surface (C₂) having a rotation axis that coincides with the optical axis (AX) of the light source, the first lens cut surface (20e₁) intersecting with the first vertical plane (V₁) at a second intersection line (L₂) on an outer side extending in the direction perpendicular to the optical axis (AX) of the light source; a second vertical plane (V₂) positioned outside of the second intersection line (L₂) and on a side closer to the light irradiating portion, the second vertical plane (V₂) extending in the direction perpendicular to the optical axis (AX); and a second lens cut surface (20e₂) formed of a part of a third conical surface (C₃) having a rotation axis that coincides with the optical axis (AX) of the light source, the second lens cut surface (20e₂) intersecting with the second vertical plane (V₂) at a third intersection line (L₃) on an outer side extending in the direction perpendicular to the optical axis (AX) of the light source, and the lens cut portion is provided to an area between the front surface and the rear surface of the lens body and in a region overlapping with the light irradiating portion in a front view.

### Brief Description of Drawings

These and other characteristics, features, and advantages of the present invention will become clear from the following description with reference to the accompanying drawings, wherein:
FIG. 1 is a perspective view of a vehicular lighting fixture 10 made in accordance with principles of the present invention;
FIG. 2A is a front view of the vehicular lighting fixture 10, FIG. 2B is a rear view of the vehicular lighting fixture 10, and FIG 2C is a cross-sectional view of the vehicular lighting fixture 10 taken along line A-A in FIG. 2A;
FIG. 3 is a diagram for describing a lens cut surface 20e;
FIG. 4 is another diagram for describing the lens cut surface 20e;
FIG. 5 is still another diagram for describing the lens cut surface 20e;
FIG. 6 is a cross-sectional view illustrating the vehicular lighting fixture 10 taken along line B-B in FIG. 2A;
FIGS. 7A to 7F are each a diagram for describing a modified example of a light irradiating portion 20f;
FIG. 8 is a perspective view illustrating a vehicular lighting fixture 10A as a modified example; and
FIG. 9A is a cross-sectional view of the vehicular lighting fixture 10A showing in FIG. 8, and FIG. 9B is a cross-sectional view of a vehicular lighting fixture 10B as a modified example.

### Description of Exemplary Embodiments

A description will now be made below to vehicular lighting fixtures 10 (10A, 10B) of the present invention with reference to the accompanying drawings in accordance with exemplary embodiments. In each of the drawings, the same or corresponding component will be denoted by the same reference numeral/symbol, and a description thereof will be omitted.

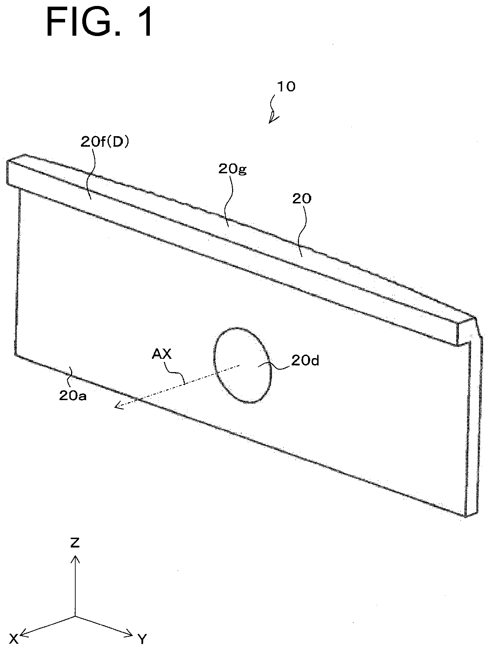

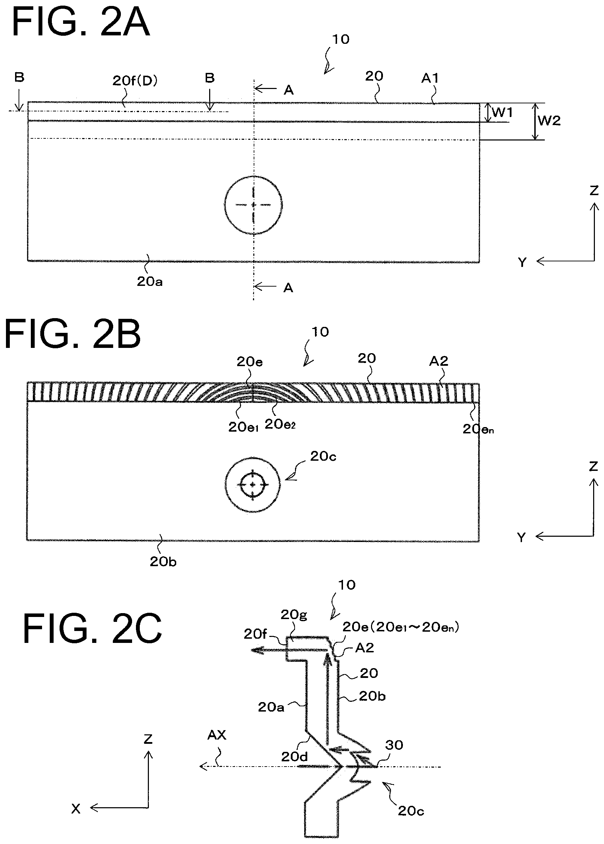

FIG. 1 is a perspective view of a vehicular lighting fixture 10, FIG. 2A is a front view thereof, FIG. 2B is a rear view thereof, and FIG 2C is a cross-sectional view thereof taken along line A-A in FIG. 2A.

The vehicular lighting fixture 10 shown in FIGS. 1 and 2A to 2C may be a tail lamp, and can be mounted on left and right sides of a rear end portion of a vehicle body (not illustrated).

As illustrated in FIGS. 2A to 2C, the vehicular lighting fixture 10 can include a lens body 20 having a front surface 20a and a rear surface 20b on the opposite side, and a light source 30 having an optical axis AX and disposed on the rear surface 20b side of the lens body 20. The vehicular lighting fixture 10 may be disposed in a lamp chamber formed by an outer lens and a housing (not illustrated), and be attached to a housing or the like. Hereinafter, for convenience of description, the XYZ axis will be defined as an orthogonal coordinate system, where the X-axis extends in the front-rear direction of a vehicle body to which the vehicular lighting fixture 10 is mounted, the Y-axis extends in the vehicle width direction, and the Z-axis extends in the vertical direction.

The vehicular lighting fixture 10 can include an elongated light irradiating region D extending in the Y direction in front view as illustrated in FIG. 2A. Light reflected from a lens cut surface 20e, which will be described in detail later, can exit through a light irradiating portion 20f, which also will be described in detail later, thereby forming the light irradiating region D as illustrated in FIG. 2C.

The lens body 20 can includes a light incident portion 20c through which the light emitted from the light source 30 can enter the lens body 20, a reflection surface 20d by which the light from the light source 30 entering the lens body 20 through the light incident portion 20c can be internally reflected about the optical axis AX of the light source 30 radially (for example, by 360 degrees), a lens cut portion 20e having lens cut surfaces 20e₁ to 20eₙ by which the light reflected from the reflection surface 20d is internally reflected toward the light irradiating portion 20f, and the light irradiating portion 20f through which the light reflected from the lens cut surfaces 20e₁ to 20eₙ is irradiated. The lens cut surfaces 20e₁ to 20eₙ can be formed from a plurality of stepped separate reflection surfaces. If the lens cut surfaces 20e₁ to 20eₙ are not specifically distinguished, they are collectively referred to as a lens cut surface 20e (which is the same reference symbol as that for the lens cut portion).

The light incident portion 20c can be provided substantially at the center of the rear surface 20b of the lens body 20 and on the optical axis AX of the light source 30. The rear surface 20b of the lens body 20 can be a plane parallel to the YZ plane, for example.

The light incident portion 20c may include a surface that can collimate light from the light source 30 that had entered the lens body 20 through the light incident portion 20c. Specifically, the light can be converted into light beams parallel to the optical axis AX of the light source 30. The light source has a light emitting surface (not illustrated) and the optical axis AX that extends in a direction perpendicular to the light emitting surface thereof at substantially the center of the light emitting surface.

The reflection surface 20d may be provided substantially at the center of the surface 20a of the lens body 20, that is, at a portion where the light incident portion 20c opposes. The front surface 20a of the lens body 20 may be a plane parallel to the YZ plane.

The reflection surface 20d may be configured to internally reflect (totally reflect) light, which has been emitted from the light source 30 and has entered the lens body 20 through the light incident portion 20c, radially about the optical axis AX of the light source 30.

The lens cut surface 20e can be configured to internally reflect the light from the reflection surface 20d toward the light irradiating portion 20f. The lens cut surface 20e will be described later in detail.

The light irradiating portion 20f can be a surface through which the light reflected from the lens cut surface 20e is irradiated (projected), and provided on a part of the front surface 20a of the lens body 20. Specifically, the light irradiating portion 20f can be provided at the front end of the front surface 20a of the lens body 20 protruding from the top end of the lens body 20 (protruding leftward in FIG. 2C), i.e., at the tip of the protruding portion 20g protruding in the light irradiation direction. Since the light reflected from the lens cut surface 20e can be guided through the protruding portion 20g, more light can be irradiated from the light irradiating portion 20f than when the protruding portion 20g is not provided. The light irradiating portion 20f may be a planar region A1 that is parallel to the YZ plane and has a rectangular outer shape, and extends in a line shape in the Y direction as illustrated in FIG. 2A.

The lens cut surface 20e can be provided to the lens cut portion 20e between the front surface 20a and the rear surface 20b of the lens body 20 and in a region A2 overlapping with the light irradiating portion 20f (planar region A1) in a front view.

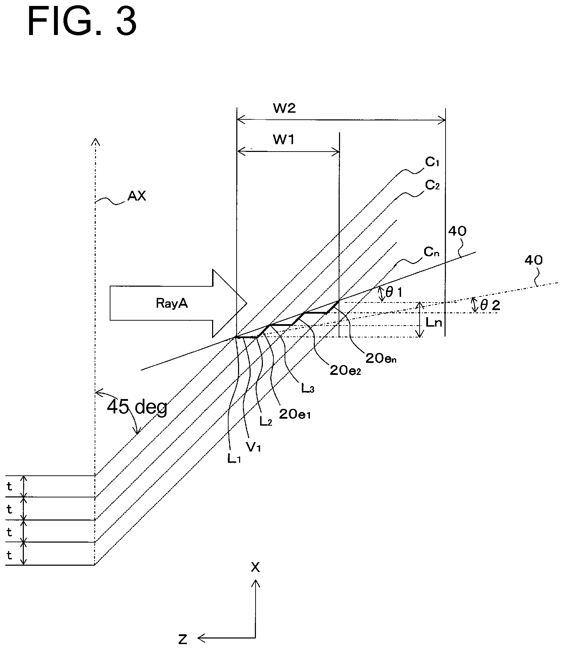

FIGS. 3 to 5 are diagrams for illustrating the lens cut surface 20e provided to the lens cut portion.

The lens cut surface 20e can be produced, for example, using CAD as follows.

First, a plurality of conical surfaces C₁ to Cₙ having the optical axis AX of the light source 30 as a common rotational axis are disposed at predetermined intervals t along the optical axis AX of the light source 30. Thus, the optical axis AX of the light source 30 coincides with the rotational axis of each of the conical surfaces C₁ to Cn. Here, n is, for example, 24, and t is, for example, 2 mm. Each of the conical surfaces C₁ to Cn may be formed from a conical surface having a cross-sectional apex angle of 90 degrees with respect to a plane including the optical axis AX of the light source 30. The cross section of each of the conical surfaces C₁ to Cₙ in a plane perpendicular to the rotational axes may be circular, elliptical, or N-sided polygonal (when N is increased, the cross section may approach circular).

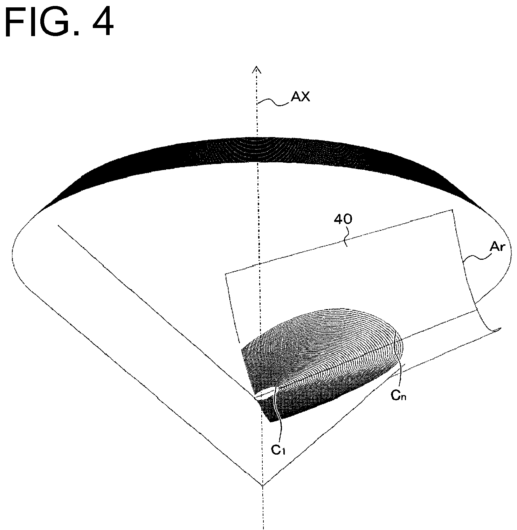

An arbitrary plane 40 is set with respect to the optical axis AX of the light source 30. As illustrated in FIG. 4, the arbitrary surface 40 can be formed from a curved surface of a circular arc Ar whose cross section by a plane parallel to the XY plane, for example, is concave toward the front (upward in FIG. 4). The circular arc may have a predetermined curvature. The arbitrary surface 40 is set in an inclined posture as illustrated in FIGS. 3 and 4. The arbitrary surface 40 may be set in a posture inclined by an angle θ1 such that the reflected light RayA from the reflection surface 20d (not illustrated in FIG. 3) enters the arbitrary surface 40 and the arbitrary surface 40 intersects the plurality of conical surfaces C₁ to Cₙ.

When the inclination angle of the arbitrary surface 40 is adjusted, the width of the light irradiating portion 20f can be adjusted. For example, as illustrated in FIG. 3, by setting the inclination angle of the arbitrary surface 40 to θ1, the width of the light irradiating portion 20f can be set to W1 (see FIG. 2A). By setting the inclination angle of the arbitrary surface 40 to θ2 which is smaller than θ1, the width of the light irradiating portion 20f can be set to W2 which is larger than W1 (see FIG. 2A). In this manner, even if the width of the light irradiating portion 20f is set to W2 which is larger than W1 (see FIG. 2A), it is possible to suppress the thickness Ln of the lens body 20 from becoming thicker in the direction of the optical axis AX (see FIG. 3).

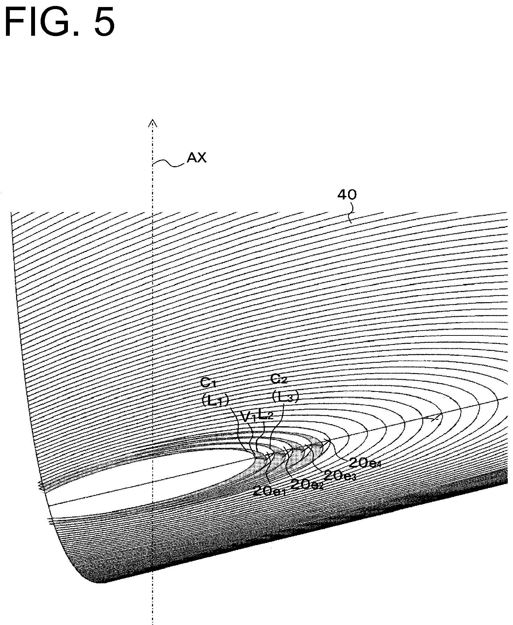

Next, as illustrated in FIGS. 3 and 5, a vertical plane V₁ extending perpendicularly to the optical axis AX of the light source 30 is set from the intersection line L₁ between the inner first conical surface C₁ (corresponding to the inner conical surface as defined in accordance with the present invention) of a pair of mutually adjoining conical surfaces, for example, the conical surfaces C₁ and C₂, and the arbitrary surface 40.

Next, part of the outer (second) conical surface C₂ (corresponding to the outer conical surface as defined in accordance with the present invention) defined by the vertical plane V₁ and the arbitrary surface 40, that is, part of the outer conical surface C₂ between the intersection line L₂ of the outer conical surface C₂ and the vertical plane V₁ and the intersection line L₃ of the outer conical surface C₂ and the arbitrary surface 40 is defined as the lens-cut surface 20e₁.

In the same manner, the lens cut surface 20e₂ can also be produced for another pair of conical surfaces adjoining each other, for example, the conical surfaces C₂ and C₃.

As described above, the lens cut surfaces 20e₁ to 20eₙ disposed along the arbitrary surface 40 can be produced.

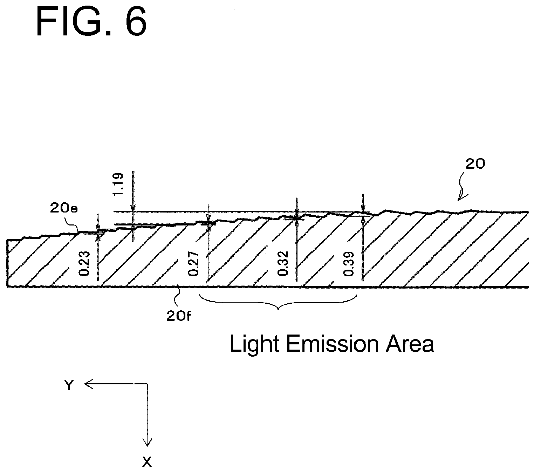

FIG. 6 is a cross-sectional view illustrating the vehicular lighting fixture 10 taken along line B-B in FIG. 2A.

As illustrated in FIG. 6, the length of the lens cut surface 20e in the direction of the optical axis AX becomes shorter, for example, 0.39 mm, 0.32 mm, 0.27 mm, and 0.23 mm, as it approaches the end portion (left end portion in FIG. 6).

The length of the lens cut surface 20e in the direction of the optical axis AX for emitting light in the light emission range may be set to 1.19 mm, for example, as indicated in FIG. 6. On the contrary, the length in the direction of the optical axis AX of the lens cut surface for emitting light in the same light emission range according to a conventional technique may be about 5 mm.

The lens body 20 with the aforementioned configuration can be molded by injection molding a transparent resin such as an acrylic or polycarbonate resin using a metal mold.

The light source 30 may be a semiconductor light emitting device such as an LED or an LD. The light source 30 may be mounted on a substrate (not illustrated), and fixed to a housing or the like in a state in which the light source 30 (light emitting surface thereof) and the light incident portion 20c precisely face to each other.

In the vehicular lighting fixture 10, when the light source 30 is turned on, the light emitted from the light source 30 can enter the lens body 20 through the light incident portion 20c. Further, the light can be internally reflected by the reflection surface 20d radially about the optical axis AX of the light source 30, and further internally reflected by the lens cut surface 20e at the lens cut portion 20e toward the light irradiating portion 20f and guided through the protruding portion 20g. As a result, the light can be irradiated through the light irradiating portion 20f forward. At this time, the light from the light source 30 can be projected through the light irradiating portion 20f as light rays parallel to the optical axis AX of the light source 30 to be irradiated forward.

With the vehicular lighting fixture 10 having this configuration, a tail lamp can be achieved. Note that a lens cut may be formed in the light irradiating portion 20f to further control light irradiated through the light irradiating portion 20f by the lens cut. In addition, the elongated light-emitting region D extending in the Y direction can be formed by the area through which reflected light from the lens cut surface 20e is projected from the light irradiating portion 20f.

Note that the density of the lens cut surface 20e with respect to the lens cut portion controlled as necessary can facilitate the uniform light emission of the light emitting region D that can be visually recognized by an observer. Here, the density in the lens cut portion which indicates the number of the lens cut surfaces 20e, each of which is contained in one segment defined between the conical surface and the vertical plane, per unit area of the lens cut portion can be adjusted to provide a region with a relatively high density and a region with a relatively low region, so that the light exiting through the light irradiating region formed can be uniformly observed. Here, the larger the density thereof, the better the uniformity of light emission observed from its front side.

As discussed above, this exemplary embodiment made in accordance with the principles of the present invention can provide the vehicular lighting fixture 10 capable of causing light to be projected through a part of the front surface 20a as well as the lens body 20.

This is because the lens cut surface 20e of the lens cut portion 20e which can internally reflect the light, which is reflected from the reflection surface 20d, toward the light irradiating portion 20f is provided between the front surface 20a and the rear surface 20b of the lens body 20 and in the region A2 which overlaps with the light irradiating portion 20f (planar region A1) in front view. That is, unlike the conventional technique described above, this is because the lens cut surface 20e is partially provided.

Further according to the present exemplary embodiment, the width of the light irradiating portion 20f can be adjusted by adjusting the inclination angle of the arbitrary surface 40. By setting the inclination angle of the arbitrary surface 40 to θ2 which is smaller than θ1, the width of the light irradiating portion 20f can be set to the width W2 which is larger than W1 (see FIG. 2A). In this manner, even if the width of the light irradiating portion 20f is set to W2 which is larger than W1, it is possible to suppress the thickness Ln of the lens body 20 from becoming thicker in the direction of the optical axis AX (see FIG. 3). As a result, the costly thick-wall molding of the lens body 20, which needs to precisely control temperatures, can be avoided, whereby the production costs as well as burden during production can be reduced.

A description will now be given of modified examples.

Although an example in which the vehicular lighting fixture of the present invention is applied to a tail lamp has been described, the present invention is not limited thereto. For example, the vehicular lighting fixture of the present invention may be applied to a stop lamp, a position lamp, a turn signal lamp, a back lamp, or a DRL (Daytime Running Lamp) lamp.

Although an example in which the light irradiating portion 20f extending in a line shape in the Y direction is used has been described, the present invention is not limited to this.

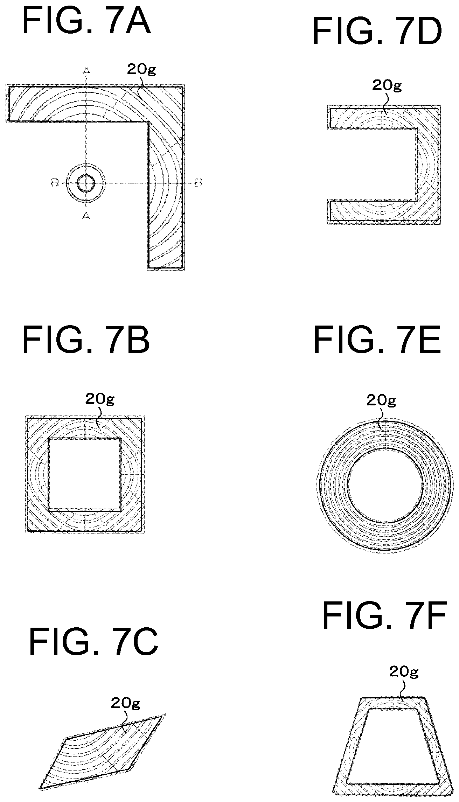

FIGS. 7A to 7F are each a diagram for describing a modified example of a light irradiating portion 20. These drawings show the lens cut portion where the lens cut surface 20e is formed, visually recognized through the light irradiating portion 20f.

Modified examples of shapes or patterns of the light irradiating portion 20f or the lens cut surface 20e as seen through the light irradiating portion 20f may include an inverted L shape as illustrated in FIG. 7A, a rectangular shape as illustrated in FIG. 7B, a rhombic shape as illustrated in FIG. 7C, a square U shape as illustrated in FIG. 7D, a circular (ring) shape as illustrated in FIG. 7E, and a trapezoidal shape as illustrated in FIG. 7F, although the shape thereof is not limited these.

According to any of these modified examples, the thin lens body 20 can project light regardless of the shape of the light irradiating portion 20f.

In the aforementioned exemplary embodiment, an example as the arbitrary surface 40 has been described in which a curved surface having a circular arc Ar (e.g., a circular arc of a predetermined curvature) whose cross section obtained by cutting it with a plane parallel to the XY plane is concave toward the front (upward in FIG. 4) is used, but the present invention is not limited thereto. As the arbitrary surface 40, a flat surface may be used, or a curved surface, a surface in which a curved surface and a flat surface are provided in combination, or the like may be used.

Although an example in which the protruding portion 20g that protrudes in the light irradiation direction is provided has been described, the present invention is not limited thereto, and the protruding portion 20g may be omitted.

Although an example in which the lens body 20 including the reflection surface 20d and the light incident portion 20c provided on the rear surface 20b is used has been described, the present invention is not limited thereto.

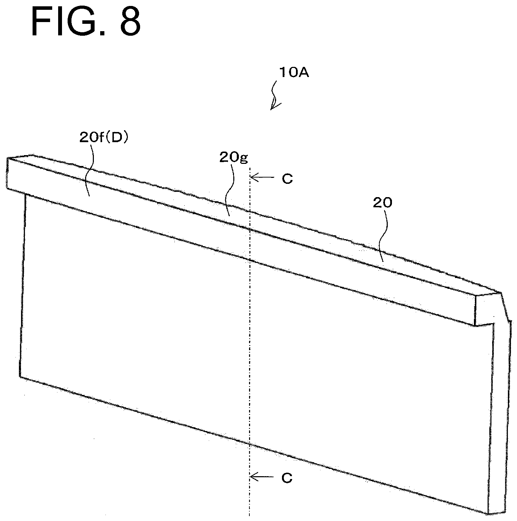

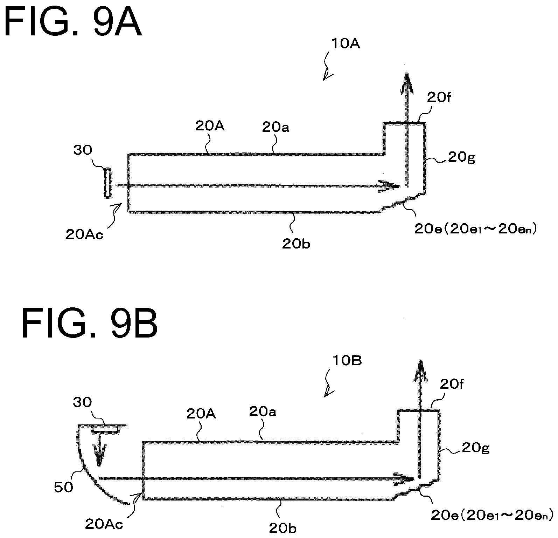

FIG. 8 is a perspective view illustrating a vehicular lighting fixture 10A as a modified example, and FIG. 9A is a cross-sectional view of the vehicular lighting fixture 10A showing in FIG. 8, and FIG. 9B is a cross-sectional view of a vehicular lighting fixture 10B as a further modified example.

In this exemplary embodiment as illustrated in FIGS. 8 and 9A, the reflection surface 20d may be omitted, and the lens body 20A in which the light incident portion 20Ac is provided on one end surface of the lens body 20A may be used. The one end surface of the lens body is located opposite to the lens cut portion. In this case, the light source 30 can be disposed so as to oppose one end surface of the lens body 20A, i.e., the light incident portion 20Ac. Further, in this case, the optical axis AX of the light source 30 for use in designing the lens cur surface 20e is considered as being parallel to the light irradiation portion as in the previous exemplary embodiment. The same is applied to the case shown in FIG. 9B described later.

In the vehicular lighting fixture 10A with this configuration, light from the light source 30 can enter the lens body 20A through the light incident portion 20Ac and be internally reflected by the lens cut surface 20e of the lens cut portion 20e toward the light irradiating portion 20f. Accordingly, the light can exit through the light irradiating portion 20f and be irradiated forward.

As an alternative modified example, a reflector 50 may be further provided between the light source 30 and the light incident portion 20Ac as illustrated in FIG. 9B.

In this case, light from the light source 30 can enter the lens body 20A through the light incident portion 20Ac after reflected by the reflector 50, and be internally reflected by the lens cut surface 20e toward the light irradiating portion 20f. As a result, the light can be projected from the light irradiating portion 20f and irradiated forward.

Although an example in which a semiconductor light-emitting element such as an LED, an LD, or the like is used as the light source 30 has been described, the present invention is not limited thereto. A bulb light source may be used as the light source 30.

The indicated numerical values in the exemplary embodiment are illustrative, and various appropriate numerical values can be used for each size and the like.

## Claims

1. A vehicular lighting fixture (10, 10A, 10B) comprising:
a lens body (20, 20A) including a front surface (20a) and a rear surface (20b) opposite to the front surface (20a); and
a light source (30), wherein
the lens body (20, 20A) comprises:
a light incident portion (20c, 20Ac) through which light from the light source (30) enters the lens body (20, 20A);
a lens cut portion (20e) having at least one lens cut surface (20e, 20e₁ to 20eₙ) configured to internally reflect light that has been emitted from the light source (30) and has entered the lens body (20, 20A) through the light incident portion (20c, 20Ac); and
a light irradiating portion (20f) that is provided on a portion of the front surface (20a) of the lens body (20, 20A) and through which light reflected from the lens cut surface (20e, 20e₁ to 20eₙ) exits,
the lens cut surface (20e, 20e₁ to 20eₙ) is formed from a surface of an outer conical surface (C₂) having a rotation axis so that the lens cut surface (20e, 20e₁ to 20eₙ) has a rotation axis which coincides with the rotation axis of the outer conical surface (C₂), and is defined by an arbitrary surface (40) and a vertical plane (V₁) extending in a direction perpendicular to the rotation axis from a line of intersection between the arbitrary surface (40) and an inner conical surface (C₁) disposed inside the outer conical surface (C₂) and having the same rotation axis as that of the outer conical surface (C₂), and
the lens cut surface (20e, 20e₁ to 20eₙ) is provided to the lens cut portion (20e) between the front surface (20a) and the rear surface (20b) of the lens body (20, 20A) and in a region overlapping with the light irradiating portion (20f) in a front view.

2. The vehicular lighting fixture (10, 10A, 10B) according to claim 1, wherein
the light source (30) has an optical axis (AX) and the light incident portion (20c, 20Ac) is provided on the optical axis (AX) of the light source (30),
the lens body (20, 20A) further includes a reflection surface (20d) configured to internally reflect light from the light source (30), which has entered through the light incident portion (20c, 20Ac), radially about the optical axis (AX) of the light source (30),
the lens cut surface (20e, 20e₁ to 20eₙ) is provided on an optical path of reflected light from the reflection surface (20d), and
the light irradiating portion (20f) is provided on an optical path of reflected light from the lens cut surface (20e, 20e₁ to 20eₙ).

3. The vehicular lighting fixture (10, 10A, 10B) according to claim 1, wherein
the light incident portion (20c, 20Ac) is provided on one end surface of the lens body (20, 20A) which is located opposite to the lens cut portion (20e),
the lens cut surface (20e, 20e₁ to 20eₙ) is provided on an optical path of the light that has emitted from the light source (30) and has entered the lens body (20, 20A) from the light incident portion (20c, 20Ac), and
the light irradiating portion (20f) is provided on an optical path of reflected light from the lens cut surface (20e, 20e₁ to 20eₙ).

4. The vehicular lighting fixture (10B) according to claim 3, further comprising a reflector (50) provided between the light source (30) and the light incident portion (20Ac), and wherein
light from the light source (30) enters through the light incident portion (20Ac) as reflected light reflected by the reflector (50).

5. The vehicular lighting fixture (10, 10A, 10B) according to any one of claims 1 to 4, wherein
the lens body (20, 20A) comprises a protruding portion (20g) configured to protrude in a light irradiation direction and have a tip, and
the light irradiating portion (20f) is provided at the tip of the protruding portion (20g).

6. The vehicular lighting fixture (10, 10A, 10B) according to claim 1, wherein
the light irradiating portion (20f) includes a light emitting region through which the reflected light from the lens cut surface (20e, 20e₁ to 20eₙ) can exit, and
a density in the lens cut portion (20e) which indicates a number of the lens cut surfaces (20e, 20e₁ to 20eₙ), each of which is contained in one segment defined between the conical surface and the vertical plane, per unit area of the lens cut portion (20e) is adjusted to provide a region with a relatively high density and a region with a relatively low region, so that the light exiting through the light emitting region formed is uniformly observed.

7. A lens body (20, 20A) having a front surface (20a) and a rear surface (20b) opposite to the front surface (20a), comprising:
a light incident portion (20c, 20Ac) through which light from a light source (30) enters the lens body (20, 20A);
a lens cut portion (20e) having at least one lens cut surface (20e, 20e₁ to 20eₙ) configured to internally reflect light that has been emitted from the light source (30) and has entered the lens body (20, 20A) through the light incident portion (20c, 20Ac); and
a light irradiating portion (20f) that is provided on a portion of the front surface (20a) of the lens body (20, 20A) and through which light reflected from the lens cut surface (20e, 20e₁ to 20eₙ) exits, wherein
the lens cut surface (20e, 20e₁ to 20eₙ) is formed from a surface of an outer conical surface (C₂) having a rotation axis so that the lens cut surface (20e, 20e₁ to 20eₙ) has a rotation axis which coincides with the rotation axis of the outer conical surface (C₂), and is defined by an arbitrary surface (40) and a vertical plane (V₁) extending in a direction perpendicular to the rotation axis from a line of intersection between the arbitrary surface (40) and an inner conical surface (C₁) disposed inside the outer conical surface (C₂) and having the same rotation axis as that of the outer conical surface (C₂), and
the lens cut surface (20e, 20e₁ to 20eₙ) is provided to the lens cut portion (20e) between the front surface (20a) and the rear surface (20b) of the lens body (20, 20A) and in a region overlapping with the light irradiating portion (20f) in a front view.

8. A vehicular lighting fixture (10, 10A, 10B) comprising:
a lens body (20, 20A) including a front surface (20a) and a rear surface (20b) opposite to the front surface (20a); and
a light source (30) having an optical axis (AX), wherein
the lens body (20, 20A) comprises:
a light incident portion (20c, 20Ac) through which light emitted from the light source (30) enters the lens body (20, 20A);
a lens cut portion (20e) configured to internally reflect light that has been emitted from the light source (30) and has entered the lens body (20, 20A) through the light incident portion (20c, 20Ac); and
a light irradiating portion (20f) that is provided on a portion of the front surface (20a) of the lens body (20, 20A) and through which light reflected from the lens cut portion (20e) exits,
the lens cut portion (20e) includes at least two lens cut surfaces (20e, 20e₁ to 20eₙ) formed from stepped separate reflection surfaces (20e₁ to 20eₙ), which each include a first vertical plane (V₁) extending in a direction perpendicular to the optical axis (AX) of the light source (30); a first lens cut surface (20e₁) formed of a part of a second conical surface (C₂) having a rotation axis that coincides with the optical axis (AX) of the light source (30), the first lens cut surface (20e₁) intersecting with the first vertical plane (V₁) at a second intersection line (L₂) on an outer side extending in the direction perpendicular to the optical axis (AX) of the light source (30); a second vertical plane (V₂) positioned outside of the second intersection line (L₂) and on a side closer to the light irradiating portion (20f), the second vertical plane (V₂) extending in the direction perpendicular to the optical axis (AX); and a second lens cut surface (20e₂) formed of a part of a third conical surface (C₃) having a rotation axis that coincides with the optical axis (AX) of the light source (30), the second lens cut surface (20e₂) intersecting with the second vertical plane (V₂) at a third intersection line (L₃) on an outer side extending in the direction perpendicular to the optical axis (AX) of the light source (30), and
the lens cut portion (20e) is provided to an area between the front surface (20a) and the rear surface (20b) of the lens body (20, 20A) and in a region overlapping with the light irradiating portion (20f) in a front view.

9. The vehicular lighting fixture (10, 10A, 10B) according to claim 8, wherein
the light incident portion (20c, 20Ac) is provided on the optical axis (AX) of the light source (30),
the lens body (20, 20A) further comprises a reflection surface (20d) configured to internally reflect light from the light source (30), which has entered through the light incident portion (20c, 20Ac), radially about the optical axis (AX) of the light source (30),
the lens cut portion (20e) is provided on an optical path of reflected light from the reflection surface (20d), and
the light irradiating portion (20f) is provided on an optical path of reflected light from the lens cut portion (20e).

10. The vehicular lighting fixture (10, 10A, 10B) according to claim 8, wherein the lens cut surfaces (20e, 20e₁ to 20eₙ) in the lens cut portion (20e) have a length in the direction of the optical axis (AX) becoming shorter as the lens cut surface (20e, 20e₁ to 20eₙ) approaches an end portion thereof apart from the optical axis (AX).

11. The vehicular lighting fixture (10B) according to claim 8, further comprising a reflector (50) provided between the light source (30) and the light incident portion (20Ac), and wherein
light from the light source (30) enters through the light incident portion (20Ac) as reflected light reflected by the reflector (50).

12. The vehicular lighting fixture (10B) according to claim 11, wherein the lens cut surfaces (20e, 20e₁ to 20eₙ) in the lens cut portion (20e) have a length in the direction of the optical axis (AX) becoming shorter as the lens cut surface (20e, 20e₁ to 20eₙ) approaches an end portion thereof apart from the optical axis (AX).

13. The vehicular lighting fixture (10B) according to claim 9, further comprising a reflector (50) provided between the light source (30) and the light incident portion (20Ac), and wherein
light from the light source (30) enters through the light incident portion (20Ac) as reflected light reflected by the reflector (50).

14. A lens body (20, 20A) having a front surface (20a) and a rear surface (20b) opposite to the front surface (20a), comprising:
a light incident portion (20c, 20Ac) through which light from a light source (30) enters the lens body (20, 20A);
a lens cut portion (20e) configured to internally reflect light that has been emitted from the light source (30) and has entered the lens body (20, 20A) through the light incident portion (20c, 20Ac); and
a light irradiating portion (20f) that is provided on a portion of the front surface (20a) of the lens body (20, 20A) and through which light reflected from the lens cut portion (20e) exits, wherein
the lens cut portion (20e) includes at least two lens cut surfaces (20e, 20e₁ to 20eₙ) formed from stepped separate reflection surfaces (20e₁ to 20eₙ), which each include a first vertical plane (V₁) extending in a direction perpendicular to the optical axis (AX) of the light source (30); a first lens cut surface (20e₁) formed of a part of a second conical surface (C₂) having a rotation axis that coincides with the optical axis (AX) of the light source (30), the first lens cut surface (20e₁) intersecting with the first vertical plane (V₁) at a second intersection line (L₂) on an outer side extending in the direction perpendicular to the optical axis (AX) of the light source (30); a second vertical plane (V₂) positioned outside of the second intersection line (L₂) and on a side closer to the light irradiating portion (20f), the second vertical plane (V₂) extending in the direction perpendicular to the optical axis (AX); and a second lens cut surface (20e₂) formed of a part of a third conical surface (C₃) having a rotation axis that coincides with the optical axis (AX) of the light source (30), the second lens cut surface (20e₂) intersecting with the second vertical plane (V₂) at a third intersection line (L₃) on an outer side extending in the direction perpendicular to the optical axis (AX) of the light source (30), and
the lens cut portion (20e) is provided to an area between the front surface (20a) and the rear surface (20b) of the lens body (20, 20A) and in a region overlapping with the light irradiating portion (20f) in a front view.
